# EUROPEAN PATENT SPECIFICATION

(11) **EP 3 348 595 B1**
(45) Date of publication and mention of the grant of the patent: **07.10.2026**
(21) Application number: 16880746.9
(22) Date of filing: 25.10.2016
(51) Int. Cl.: C08G 63/183, C08G 63/83, D01F 6/62

(54) **ULTRA-LOW SHRINKAGE POLYESTER INDUSTRIAL YARN AND PREPARATION METHOD THEREOF**
POLYESTERINDUSTRIEGARN MIT ULTRANIEDRIGER SCHRUMPFUNG UND HERSTELLUNGSVERFAHREN DAFÜR
FIL INDUSTRIEL DE POLYESTER À TRÈS FAIBLE RETRAIT ET SON PROCÉDÉ DE PRÉPARATION

(30) Priority: 29.12.2015 CN 201511019261
(43) Date of publication of application: 18.07.2018
(73) Proprietor: Jiangsu Hengli Chemical Fibre Co., Ltd., Wujiang, Jiangsu 215226 (CN)
(72) Inventor: ZHAO, Huirong, Wujiang Suzhou Jiangsu 215226 (CN); FAN, Xiaobing, Wujiang Suzhou Jiangsu 215226 (CN); YANG, Chaoming, Wujiang Suzhou Jiangsu 215226 (CN); WANG, Lijun, Wujiang Suzhou Jiangsu 215226 (CN)
(74) Representative: Franks & Co Limited
(86) International application number: PCT/CN2016/103176
(87) International publication number: WO 2017/113955

(56) References cited:
- WO-A1-2007/015617
- WO-A2-2013/025062
- CN-A- 101 982 574
- CN-A- 102 797 055
- CN-A- 102 797 056
- CN-A- 102 797 057
- CN-A- 104 499 081
- CN-A- 105 463 608
- CN-A- 105 483 853
- CN-A- 105 504 239
- CN-A- 105 504 241
- CN-A- 105 504 242
- CN-A- 105 504 244
- CN-A- 105 506 773
- CN-A- 105 603 559
- CN-A- 105 646 856
- CN-A- 105 646 858
- CN-A- 12 797 056
- KR-A- 20140 089 157
- US-A1- 2004 086 733
- S R SHUKLA ET AL: "Estimation and Characterization of Polyester Oligomers", JOURNAL OF APPLIED POLYMER SCIENCE, vol. 74, no. 8, 22 September 1999 (1999-09-22), pages 1987 - 1991, XP055569969, Retrieved from the Internet <URL:10.1002/(SICI)1097-4628(19991121)74:8<1987::AID-APP12>3.0.CO;2-G> [retrieved on 20190315]

## Description

### Cross Reference To Related Applications

This application is the national phase of International Application No. PCT/CN2016/103176, filed on October 25, 2016, which is based upon and claims priority to Chinese Patent Application No. 201511019261.9, filed on December 29, 2015.

### Technical Field

The present invention relates to a process for preparing an ultra-low shrinkage polyester industrial yarn. To be specific, the process for preparing polyester and its ultra-low shrinkage industrial yarn uses a mixture of magnesium ethylene glycol and antimony ethylene glycol as the condensation catalyst, and boiling and washing the polyester sections with water and rinsing agent at 120-130°C, and 0.2-0.3MPa.

### Background

Polyethylene terephthalate (PET) is a kind of polymer with excellent performance. PET is preferred because of its high modulus, high strength, crispness, good shape retention, safe and clean, and good barrier property. It is widely used in fiber industry, bottle packaging, film production and sheets materials, etc. The output production of PET is increasing year by year and its status in the industry has been significantly improved.

Industrial polyester fiber mainly refers to those used in industry, national defense, medical care, environmental protection and cutting-edge science. It is a kind of chemical fiber which has relatively special physical and chemical structure, properties and uses, or with special functions. The characteristics can be found in its resistance against strong corrosion, wearing, high temperature, radiation, fire, burning, high voltage current. It also has high strength and high modulus, and a variety of medical usage. The tent cloth using the high strength and low shrinkage polyester industrial filament has high peel strength and tear strength, which make the tent cloth suitable for various purposes, including flexible advertising light box materials, inflatable structural materials, tent-like buildings' fabric sunshade tent and so on. The high strength and low shrinkage industrial yarn-based fabric materials are also applied in special protective clothing, camouflage, covering, backpack and other military supplements. As a kind of geotextile material with the advantages of light, soft, high strength, wear-resistant, corrosion-resistant, non-conductive, shock absorption and so on, it is also reliable and convenient to use. It can make our work more efficient, and will not damage the lifting objects. The expansion of industrial polyester fiber's applications has led the whole fiber industry to a more competitive edge in application areas. Polyester high-performance fibers are playing an increasingly important role in many aspects including reducing the weight of composite materials, durability in use and reducing maintenance costs and so on. In the next few decades, the development of high-performance polyester fiber is not only the progress of its amount, but also the development in the field of application and enhancement of the overall competitiveness of the industry chain to achieve substantial results.

High strength, high modulus, low shrinkage, dimensional stability, functionalization will be the main direction of the development of industrial polyester fiber. The fiber quality is related to the collection of polyester polymer structure, mainly related to the intermolecular force, crystal morphology and structure, orientation state structure, etc., and the shape and structure of the crystal is one of the key points. Polyester industrial yarn is widely used in different fields. For ultra-low shrinkage polyester industrial yarn, it has the characteristics of lower dry heat shrinkage and better dimensional stability. As a result, it is widely used in filter cloth, coated fabric, soft tube and belt latitude and so on.

Carboxyl end group, oligomer, and diethylene glycol (DEG) content are important quality indicators of polyester sections, in which oligomer and diethylene glycol are low molecular polymer. These reflect not only the quality of production status, but also affect the product quality after the spinning process. Therefore, reducing the carboxyl end groups, oligomers, diethylene glycol content in polyester sections play an important role in improving the quality of polyester products. The influence of carboxyl end groups on the performance of polymers cannot be ignored. Only by controlling the amount of polyester end carboxyl groups in the production, can we stabilize the uniformity of molecular weight distribution. The amount of diethylene glycol in the polyester sections is a very important quality index in polyester production. Because it has a direct impact on the melting point of polyester sections, the melting point of polyester sections will decline sharply with the increase of DEG content, so it not only reflects the quality of production, but also directly affects the post-processing and spinning process and silk quality. Oligomer in polyester is low molecular polymer with a degree of polymerization of less than 10 and can be classified into linear oligomers and cyclic oligomers, of which the majority are cyclic polymers, especially cyclic trimers. The oligomer is mainly influencing heterogeneous nucleation, spinning processing, the performance of polyester and after processing caused some adverse effects. Controlling the content of the three in polyester sections is a very important issue in the polyester production process.
Patent CN102797056A discloses a preparation method for an ultra-low shrinkage polyester industrial yarn, which mainly depends on choosing and controlling the cooling conditions in order to obtain a high-quality fiber. However, the cooling process comprises four parts, including slow cooling, pre-cooling, cooling in no-wind zone, and blowing cooling. It requires the modifications on the cooling systems under use, which is complicated and incurs higher costs. Meanwhile, it requires strict control on the cooling condition, which is also complicated and not suitable to be put into practical use and into an industrial production process.

### Summary

The present invention provides an ultra-low shrinkage polyester industrial yarn and its preparation method. To be specific, the present invention discloses a process for preparing an ultra-low shrinkage industrial yarn said yarn having a dry heat shrinkage rate of 1.8 ± 0.25%, under the testing condition of 177°C x10min x 0.05cN/dtex; said process comprising:
obtaining a polyester by the esterification of terephthalic acid and ethylene glycol and the polycondensation catalyzed by a mixture of magnesium ethylene glycol and antimony ethylene glycol and followed by;
obtaining a polyester section by granulating;
preparing the polyester section by boiling and washing, and solid state polycondensation; and
obtaining said ultra-low shrinkage polyester industrial yarn by measuring extrusion, cooling, oiling, stretching, heat setting and spinning;
wherein the carboxyl end group is less than 15 mol/t;
wherein the mass percentage of oligomer is lower than 0.5%;
wherein the molecular formula of magnesium ethylene glycol is Mg(OCH₂CH₂OH)₂;
(1a) wherein the preparation of said magnesium ethylene glycol comprises:
   adding Ethylene glycol in a single-compartment electrolytic cell, in which magnesium chloride is the supporting electrolyte,
   wherein an anode is magnesium, and a cathode is graphite;
   operating said single-compartment electrolytic cell for 10 to 12 hours under DC at a temperature of between 50 to 60°C;
   controlling an initial voltage between 6 and 10V, and controlling cathodic current density between 150 to 200mA;
   obtaining a white suspension liquid after removing the electrodes, decompressing, filtrating, and washing with anhydrous alcohol; and
   obtaining magnesium ethylene glycol after drying;
(1b) wherein the preparation of said polyester, comprising said esterification and polycondensation comprises:
   performing an esterification reaction using terephthalic acid and ethylene glycol as raw materials;
   adding in a polyether-inhibitor;
   carrying out said esterification reaction and obtaining esterification products;
   increasing pressure in a nitrogen atmosphere during said esterification reaction, controlling the pressure in a scale of atmospheric pressure to 0.3MPa, and controlling the temperature between 250 to 260°C;
   said esterification reaction ending after the amount of distillate water in the esterification reaction reaches at least 90% of the theoretical value;
   said polycondensation reaction comprising a low vacuum stage and a high vacuum stage:
      said low vacuum stage, comprising adding a catalyst and a stabilizer into the esterification reaction products;
      the condensation reaction starting under the condition of negative pressure;
      decreasing the pressure smoothly from atmospheric pressure to a pressure lower than the absolute pressure 500Pa;
      controlling the temperature between 260 to 270°C;
      controlling the reaction time from 30 to 50 mins;
      wherein the catalyst used in the reaction is said mixture of magnesium ethylene glycol and antimony ethylene glycol;
      said high vacuum stage of the polycondensation reaction comprising decreasing the pressure from atmospheric pressure to lower than an absolute pressure 100Pa;
      controlling the temperature of reaction between 275 to 280°C;
      controlling the reaction time between 50 to 90mins;
      obtaining the polyester after the reaction as mentioned above, and obtaining said polyester section by granulating;
2(c) said boiling and washing process comprises:
   boiling said polyester section with water and boiling -wash solvent for 3-5 hours at a temperature of 120-130°C and under a pressure of 0.2-0.3 MPa;
   then washing said polyester section;
2(d) solid state polycondensation comprising:
   obtaining a high-viscosity section of polyester in which an intrinsic viscosity of the polyester is raised to a value between 1.0 to 1.2 dL/g by solid state polycondensation;
   wherein the main process parameters of spinning are:
      the temperature of extrusion is 290 to 320°C;
      the air temperature of cooling is 20 to 30°C; and
wherein the process of stretching and heat setting is controlled as follows:
GR-1 at speed of 450 to 600m/min, temp: room temperature;
GR-2 at speed of 480 to 1000m/min, temp: 80 to 100°C;
GR-3 at speed of 1800 to 2500m/min, temp: 100 to 150°C;
GR-4 at speed of 2800 to 3500m/min, temp: 200 to 250°C;
GR-5 at speed of 2800 to 3500m/min, temp: 200 to 250°C;
GR-6 at speed of 2600 to 3400m/min, temp: 150 to 220°C; and
the winding speed is 2600 to 3400m/min.

Preferably the molar ratio of the ethylene glycol to terephthalic acid is in the range 1.2:1 to 2.0:1.

Preferably the mass ratio of magnesium ethylene glycol to antimony ethylene glycol in their mixture is 2 to 3:1;
the mass of the catalyst is 0.01~0.05% of the terephthalic acid;
the stabilizer is chosen from triphenyl phosphate, trimethyl phosphate and trimethyl phosphite; and
the mass of stabilizer is 0.01-0.05% of the terephthalic acid.

Preferably the mass ratio of water to the rinsing agent is 100:4 to 100:3, and the ratio of polyester section to water and rinsing agent is 1:5~10, the rinsing agent is selected from one of 2-ethoxyethanol, 2-propoxyethanol and ethylene glycol monobutyl ether.

Preferably said washing process comprises washing the polyester sections with 70-80°C water for 10-15min after boiling the polyester sections, then washing them with cold water, and drying and cooling down said polyester sections.

Preferably the polyether inhibitor is chosen from the sodium acetate and calcium acetate, the mass of polyether inhibitor is 0.01-0.05% of terephthalic acid.

Preferably the molar ratio of the ethylene glycol to terephthalic acid is 1.2:1 to 2.0:1.

The process suitably results in an ultra-low shrinkage industrial yarn, wherein the weight percentage of diethylene glycol is lower than 0.5%.

High strength, high modulus, low shrinkage, dimensional stability, functionalization will be the main direction of the development of industrial polyester fiber, and what affects the fiber quality is the aggregate structure of polyester polymer, which is mainly related to the intermolecular force, crystal morphology and structure, orientation state structure, etc. Among them, the shape and structure of the crystal is one of the key points.

Low shrinkage and dimensional stability are the main factors that make high quality polyester. The macroscopic heat shrinkage of polyester fibers is due to the entropy change tendency of the macromolecular chains of local elongation, including the internal stress caused by the development of the crimp state and the axial internal stress frozen in the spinning process in the sample, this local internal stress can be transmitted from the molecular network structure to the entire material, which will occur when the outside world to provide enough heat.

Polyester fibers are oriented semi-crystalline polymer materials, which are composed of structural units with different orientation stability: (1) high-stability and high-perfection crystalline parts; (2) relatively low-stability imperfect crystalline parts; (3) low-stability transition layer between crystalline and amorphous; (4) Unstable oriented amorphous phase. When the polyester fiber is heated, things may happen as follows, the oriented amorphous phase is retarded and crystallized; failure of the imperfect crystalline portion and recrystallization may occur: and a thickening of the crystal grains or complete melting of the crystal grains. It shows that the grain size and the degree of crystal refinement are the important factors to affect the dimensional stability of the fiber at high temperature. The low thermal shrinkage at 177°C is an excellent thermal dimensional stability fiber with two structural features: large grain size and good crystallinity. Therefore, the fiber grain size and crystallization of good integrity, is the guarantee of low shrinkage fiber's quality.

The main factors affecting the crystallization of polyester are: 1. the structure of the molecular chain itself. 2. the choice of crystallization temperature. 3. the impact of molecular weight. 4. the application of nucleating agent. 5. Finally, the impact of preparation method. Nucleation is a very important part of crystallization, and the nucleating agent to some extent can speed up the crystallization process, while the more important thing to polyester industrial yarn is the impact of the size and perfection of the crystallization.

If the content of carboxyl end group is high in polyester, the thermal stability of polyester resin is poor, while the carboxylate salt of a big polyester molecular chain is formed by the reaction of the carboxylate and polyester, which constitutes a nucleus that can accelerate heterogeneous nucleation of the polyester. Polyester contains 3-4% of oligomers, mostly in the form of low molecular ether and ester, mainly cyclic oligomer, and diethylene glycol. The influence of oligomers on the quality of the polyester cannot be ignored. They can affect the crystallization nucleation mechanism, crystallinity, crystal morphology and crystallization integrity of the polyester mainly in the form of nucleating agent, thereby affecting the quality of the polyester fiber, especially the thermal shrinkage of the polyester industrial yarn. Pure polyester without diethylene glycol will not exhibit abnormal spherulitic morphology regardless of the crystallization conditions; however, when the sample contains diethylene glycol, normal and abnormal spherulites will coexist in the crystalline zone, and as the content of diethylene glycol increases, the proportion of abnormal spherulites increases in the entire morphology, thereby affecting the integrity of the crystals and reducing the crystallinity of the polyester. Cyclic trimer in the polyester to nucleate more ways, more nucleating agent, crystallization speed, the number of large grains, but the smaller grain size, and thus affect the integrity of the crystallization. Heterogeneous nucleation increased, making high degree of stability and high degree of completion of the part of the crystal to reduce, and the enlargement of transition layer between imperfect crystalline portion with relatively low stability and low-stability crystalline and amorphous increases the polyester fiber shrinkage has an adverse effect on the thermal shrinkage of the polyester fiber.

An ultra-low shrinkage polyester industrial yarn produced by the inventive process may be characterized in that the density deviation of said ultra-low shrinkage industrial yarn≦1.5%, breaking strength ≧7.0 cN/dtex, CV value of breaking strength ≤2.5%, breaking extension 20.0±1.5%, CV value of breaking extension ≤7.0%.

The use of magnesium glycol and antimony ethylene glycol mixture as a polycondensation catalyst is because that magnesium glycol is relatively mild, the thermal degradation coefficient is small, and there are less side reactions caused during the reaction, which can reduce terminal carboxyl and oligomer in production. The main factors causing thermal degradation are high temperature and the catalyst. High temperature is because the reaction strength is too high, leading to accelerated degradation, which results in carboxyl end groups, but also increases the cyclic oligomer. Catalyst is related to the catalyst degradation reaction constant. In polycondensation process, the role of the catalyst is not only to catalyze the formation of the main reaction, and to affect the rate and yield of the reaction, but also to catalyze thermal degradation and ether bond formation, and increase the content of diethylene glycol, thereby increasing the content of carboxyl end groups.

Preferably the stabilizer is selected from triphenyl phosphate, trimethyl phosphate and trimethyl phosphite, the amount of stabilizer is the pair 0.01% to 0.05% by weight of phthalic acid. Stabilizers are mainly phosphate ester. The main role is to capture the reaction generated during the polymerization of free radicals, in order to reduce side effects.

Preferably the mass ratio of the water and the rinse agent is 100: 4 to 100: 3, the ratio of polyester sections and water and the rinse agent, that is, the solid-liquid ratio Is 1: 10 to 1:5. The rinsing agent is chosen from ethylene glycol monoethyl ether, ethylene glycol monopropyl ether and ethylene glycol monobutyl ether. Add a small amount of rinsing agent to the water, and rinsing agent dissolves in water, and it can also dissolve most of the low molecular ether and ester, which helps to improve the washing effect and oligomer reduction.

The polyether-inhibitor reduces the formation of ether under acidic conditions by adding a small amount of NaAc, thereby reducing the reaction of ethylene glycol to diethylene glycol.

The process according to the present invention is intended to provide an ultra-low shrinkage polyester industrial yarn which employs a relatively mild type of polycondensation catalyst, magnesium ethylene glycol. With less side reaction induced during the reaction and less thermal degradation during processing, it reduces the production of oligomers in the process. Polyester sections were brewed at 130°C and 0.3MPa with water and solvent, which improved the washing effect and oligomer reduction. The reduction of oligomer in polymerization process, and the reduction of the thermal degradation during processing, greatly reduces the impurities in the polyester, and also reduces the amount of nucleating agent in the polyester, and increases homogeneous nucleation rate on the basis of the reduction of heterogeneous nucleation. It is conducive to ultra-low shrinkage polyester industrial fibers in the grain size growth and crystallization optimization optimization.

### Benefits:

- This method uses the mixture of magnesium glycol and antimony ethylene glycol as a polycondensation catalyst. Magnesium glycol is relatively mild, the thermal degradation coefficient is small, and fewer side effects in the reaction process reduce production of terminal carboxyl and oligomer in process.
- The content of carboxyl groups in the polyester sections is less than 15 mol/t, the content of oligomers is less than 0.5% and the content of diethylene glycol is less than 0.5%, which is beneficial to further improve the fiber quality.
- Polyester sections can be washed with water and the detergent at 120 ~ 130°C and 0.2 ~ 0.3MPa to improve the washing effect and reduce the oligomer.
- Polyether-inhibitor reduces the formation of ether under acidic conditions by adding a small amount of NaAc, which reduces the activity of ethylene glycol to diethylene glycol.
- Oligomer's decreasing during polymerization, and the reduction of thermal degradation during the process, greatly reduce the impurities in the polyester, and also reduce the amount of nucleating agent in polyester, and increase homogeneous nucleation rate on the basis of reducing the heterogeneous nucleation in the process, which is conducive to ultra-low shrinkage polyester industrial fiber grain size growth and crystallization of the optimization.
- The ultra-low shrinkage polyester industrial yarn with low dry heat shrinkage and good dimensional stability and other characteristics can be widely used in filter cloth, coated fabrics, hoses and conveyor lines and so on.

The invention is set out in the appended set of claims.

### Detailed Description Of The Embodiments

Hereinafter, the present invention will be described in more detail by the following examples. It should be noticed that these examples are only for illustrating the present invention and are not intended to limit the scope of the present invention. In addition, it should be noticed that after reading the content of the present invention, those skilled in this field can make various modifications or changes to the present invention, and these equivalent forms also apply to the scope of the appended claims of this application.

The preparation method of the ultra-low shrinkage polyester industrial yarn of the invention comprises the following steps: polycondensing terephthalic acid and ethylene glycol through esterification and obtaining polyester under the catalysis of a mixture of magnesium glycol and antimony ethylene glycol. Polyester sections are obtained by granulation, and then ultra-low shrinkage polyester industrial yarn is prepared through solvent cleaning and solid state polycondensation, then metered, extruded, cooled, oiled, stretched, heat-set and wound.

### Example 1

A process for preparing an ultra-low shrinkage polyester industrial yarn, wherein the main process is:
**1.** Preparation of catalyst magnesium glycol:
   Add ethylene glycol into the single-compartment electrolytic cell, magnesium chloride is electrolyte, the anode is magnesium, the cathode is graphite. Under DC, the initial voltage is 6V, the cathode current density is 150mA, and electrolysis is carried out for 10 hours at 50°C. Remove the electrode after the electrolysis, we can get white suspension. Filter it under reduced pressure, wash the white solid with anhydrous ethanol, and we get magnesium ethylene glycol.
**2.** Preparation of Polyester, Including Esterification and Polycondensation:
   Esterification reaction:
      Using terephthalic acid and ethylene glycol as raw materials, ethylene glycol and terephthalic acid molar ratio of 1.2: 1, adding polyether-inhibitor sodium acetate, sodium acetate dosage of terephthalic acid in an amount of 0.01% by weight. Start esterification reaction under nitrogen atmosphere pressure, and control the pressure at atmospheric pressure, the temperature at 250°C. When esterified water distillate amount reaches 91% of the theoretical value of the esterification, reaction ends.
   Polycondensation reaction:
      Including polycondensation reaction of low vacuum phase and polycondensation reaction high vacuum phase:
      In the polycondensation reaction low-vacuum stage, add catalyst and the stabilizer acid triphenyl ester into the esterification product. The acid triphenyl ester dosage is 0.01% of terephthalic acid by weight, and the amount of catalyst is 0.01% of terephthalic acid by mass. The polycondensation reaction is started under the condition of negative pressure, the pressure is steadily pumped from the atmospheric pressure to the absolute pressure of 498Pa, the temperature is controlled at 260°C, and the reaction time is 30 minutes. The catalyst is a mixture of magnesium ethylene glycol and antimony ethylene glycol, in which magnesium glycol and antimony ethylene glycol mass ratio is 2: 1;
      After the polycondensation reaction in the low-vacuum stage, the vacuum is continued to reduce the reaction pressure to 98Pa, the reaction temperature is controlled at 275°C., and the reaction time is 50 minutes. The polyester sections are obtained by granulation.
**3.** Solvent cleaning
   Polyester sections are washed with water and rinsing agent ethylene glycol monoethyl ether at 120°C and 0.2MPa for 3 hours. After washing, the polyester sections are washed with hot water at 70°C for 10 minutes and then washed with cold water. After drying and cooling, the mass ratio of water to the rinsing agent is 100: 3, the ratio of the polyester slice to the water and the rinsing agent, that is, the solid to liquid ratio is 1: 5;
**4.** Solid-phase polycondensation:
   The obtained polyester sections are solidified by polycondensation to increase the intrinsic viscosity of the polyester sections to 1.0 dL/g, that is, high-viscosity sections.
**5.** The main process parameters in spinning:
   The temperature of extrusion is 290 °C,
   The air temperature of cooling is 20 °C,
   The process of stretching and heat setting:
      GR-1 speed 450m/min, temp: room temperature,
      GR-2 speed 480m/min, temp: 80 °C,
      GR-3 speed 1800m/min, temp: 100 °C,
      GR-4 speed 2800m/min, temp: 200 °C,
      GR-5 speed 2800m/min, temp: 200 °C,
      GR-6 speed 2600m/min, temp: 200 °C,
   The winding speed is 2600 m/min.
   The ultra-low shrinkage polyester industrial yarn obtained under the conditions of a temperature of 177°C ×10min×0.05cN/dtex has the dry heat shrinkage rate of 2.05%. Additionally, the linear density deviation rate is 1.4%, breaking strength is 7.1cN/dtex, CV value of breaking strength is 2.3%, breaking extension is 21.5% and CV value of breaking extension is 6.8%.

### Example 2

An ultra-low shrinkage polyester industrial yarn preparation method, the main process is:
1. Preparation of catalyst magnesium glycol:
   Add ethylene glycol into the single-compartment electrolytic cell, magnesium chloride is electrolyte, the anode is magnesium, the cathode is graphite. Under DC, the initial voltage is 10V, the cathode current density is 200mA, and electrolysis is carried out for 12 hours at 60°C. Remove the electrode after the electrolysis, we can get white suspension. Filter it under reduced pressure, wash the white solid with anhydrous ethanol, and we get magnesium ethylene glycol.
2. Preparation of Polyester, Including Esterification and Polycondensation:
   Esterification reaction:
      Using terephthalic acid and ethylene glycol as raw materials, ethylene glycol and terephthalic acid molar ratio of 2.0: 1, adding polyether-inhibitor calcium acetate, calcium acetate dosage of terephthalic acid in an amount of 0.05% by weight. Start esterification reaction under nitrogen atmosphere pressure, and control the pressure at 0.3MPa, the temperature at 260°C. When esterified water distillate amount reaches 92% of the theoretical value of the esterification, reaction ends.
   Polycondensation reaction:
      Including polycondensation reaction of low vacuum phase and polycondensation reaction high vacuum phase:
      In the polycondensation reaction low-vacuum stage, add catalyst and the stabilizer trimethyl phosphate into the esterification product. The trimethyl phosphate dosage is 0.02% of terephthalic acid by weight, and the amount of catalyst is 0.02% of terephthalic acid by mass. The polycondensation reaction is started under the condition of negative pressure, the pressure is steadily pumped from the atmospheric pressure to the absolute pressure of 495Pa, the temperature is controlled at 265°C, and the reaction time is 40 minutes. The catalyst is a mixture of magnesium ethylene glycol and antimony ethylene glycol, in which magnesium glycol and antimony ethylene glycol mass ratio is 3: 1;
      After the polycondensation reaction in the low-vacuum stage, the vacuum is continued to reduce the reaction pressure to 98Pa, the reaction temperature is controlled at 278°C., and the reaction time is 80 minutes. The polyester sections are obtained by granulation.
3. Solvent cleaning
   Polyester sections are washed with water and rinsing agent ethylene glycol monopropyl ether at 125°C and 0.25MPa for 4 hours. After washing, the polyester sections are washed with hot water at 78°C for 12 minutes and then washed with cold water. After drying and cooling, the mass ratio of water to the rinsing agent is 100: 4, the ratio of the polyester slice to the water and the rinsing agent, that is, the solid to liquid ratio is 1: 9;
**4.** Solid-phase polycondensation:
   The obtained polyester sections are solidified by polycondensation to increase the intrinsic viscosity of the polyester sections to 1.1 dL/g, that is, high-viscosity sections.
**5.** The main process parameters in spinning:
   The temperature of extrusion is 300 °C,
   The air temperature of cooling is 25 °C,
   The process of stretching, heat setting:
      GR-1 speed 500m/min, temperature is room temperature,
      GR-2 speed 580m/min, temp: 90 °C,
      GR-3 speed 2000m/min, temp: 120 °C,
      GR-4 speed 3000m/min, temp: 220 °C,
      GR-5 speed 3000m/min, temp: 220 °C,
      GR-6 speed 2700m/min, temp: 220 °C,
   The winding speed is 2700 m/min.

The ultra-low shrinkage polyester industrial yarn obtained under the conditions of a temperature of 177°C ×10min×0.05cN/dtex has the dry heat shrinkage rate of 1.55%. Additionally, the linear density deviation rate of 1.5%, breaking strength of 8.2cN/dtex, CV value of breaking strength is 2.2%, breaking extension is 18.5% and CV value of breaking extension is 6.2%.

### Example 3

An ultra-low shrinkage polyester industrial yarn preparation method, the main process is:
1. Preparation of catalyst magnesium glycol:
   Add ethylene glycol into the single-compartment electrolytic cell, magnesium chloride is electrolyte, the anode is magnesium, the cathode is graphite. Under DC, the initial voltage is 8V, the cathode current density is 160mA, and electrolysis is carried out for 11 hours at 56°C. Remove the electrode after the electrolysis, we can get white suspension. Filter it under reduced pressure, wash the white solid with anhydrous ethanol, and we get magnesium ethylene glycol.
2. Preparation of Polyester, Including Esterification and Polycondensation:
   Esterification reaction:
      Using terephthalic acid and ethylene glycol as raw materials, ethylene glycol and terephthalic acid molar ratio of 1.8: 1, adding plyether-inhibitor sodium acetate, sodium acetate dosage of terephthalic acid in an amount of 0.03% by weight. Start esterification reaction under nitrogen atmosphere pressure, and control the pressure at 0.2MPa, the temperature at 255°C. When esterified water distillate amount reaches 95% of the theoretical value of the esterification, reaction ends.
   Polycondensation reaction:
      Including polycondensation reaction of low vacuum phase and polycondensation reaction high vacuum phase:
      In the polycondensation reaction low-vacuum stage, add catalyst and the stabilizer trimethyl phosphite into the esterification product. The trimethyl phosphite dosage is 0.03% of terephthalic acid by weight, and the amount of catalyst is 0.04% of terephthalic acid by mass. The polycondensation reaction is started under the condition of negative pressure, the pressure is steadily pumped from the atmospheric pressure to the absolute pressure of 495Pa, the temperature is controlled at 266°C, and the reaction time is 38 minutes. The catalyst is a mixture of magnesium ethylene glycol and antimony ethylene glycol, in which magnesium glycol and antimony ethylene glycol mass ratio is 3: 1;
      After the polycondensation reaction in the low-vacuum stage, the vacuum is continued to reduce the reaction pressure to 99Pa, the reaction temperature is controlled at 277°C., and the reaction time is 70 minutes. The polyester sections are obtained by granulation.
3. Solvent cleaning
   Polyester sections are washed with water and rinsing agent ethylene glycol monobutyl ether at 128°C and 0.25MPa for 3 hours. After washing, the polyester sections are washed with hot water at 75°C for 12 minutes and then washed with cold water. After drying and cooling, the mass ratio of water to the rinsing agent is 100: 4, the ratio of the polyester slice to the water and the rinsing agent, that is, the solid to liquid ratio is 1: 8;
**4.** Solid-phase polycondensation:
   The obtained polyester sections are solidified by polycondensation to increase the intrinsic viscosity of the polyester sections to 1.2 dL/g, that is, high-viscosity sections.
**5.** The main process parameters in spinning:
   The temperature of extrusion is 290 °C,
   The air temperature of cooling is 20 °C,
   The process of stretching, heat setting:
      GR-1 speed 450m/min, temp: room temperature,
      GR-2 speed 480m/min, temp: 80 °C,
      GR-3 speed 1800m/min, temp: 100 °C,
      GR-4 speed 2800m/min, temp: 200 °C,
      GR-5 speed 2800m/min, temp: 200 °C,
      GR-6 speed 2600m/min, temp: 200 °C,
   The winding speed is 2600 m/min.
   The ultra-low shrinkage polyester industrial yarn obtained under the conditions of a temperature of 177°C ×10min×0.05cN/dtex has the dry heat shrinkage rate of 1.8%. Additionally, the linear density deviation rate is 1.2%, breaking strength is 8.5cN/dtex, CV value of breaking strength is 1.8%, breaking extension is 20.1% and CV value of breaking extension is 6.8%.

### Example 4

An ultra-low shrinkage polyester industrial yarn preparation method, the main process is:
**1.** Preparation of catalyst magnesium glycol:
   Add ethylene glycol into the single-compartment electrolytic cell, magnesium chloride is electrolyte, the anode is magnesium, the cathode is graphite. Under DC, the initial voltage is 10V, the cathode current density is 150mA, and electrolysis is carried out for 12 hours at 50°C. Remove the electrode after the electrolysis, we can get white suspension. Filter it under reduced pressure, wash the white solid with anhydrous ethanol, and we get magnesium ethylene glycol.
**2.** Preparation of Polyester, Including Esterification and Polycondensation:
   Esterification reaction:
      Using terephthalic acid and ethylene glycol as raw materials, ethylene glycol and terephthalic acid molar ratio of 1.2: 1, adding polyether-inhibitor sodium acetate, sodium acetate dosage of terephthalic acid in an amount of 0.04% by weight. Start esterification reaction under nitrogen atmosphere pressure, and control the pressure at 0.2MPa, the temperature at 258°C. When esterified water distillate amount reaches 96% of the theoretical value of the esterification, reaction ends.
   Polycondensation reaction:
      Including polycondensation reaction of low vacuum phase and polycondensation reaction high vacuum phase:
      In the polycondensation reaction low-vacuum stage, add catalyst and the stabilizer acid triphenyl ester into the esterification product. The acid triphenyl ester dosage is 0.03% of terephthalic acid by weight, and the amount of catalyst is 0.04% of terephthalic acid by mass. The polycondensation reaction is started under the condition of negative pressure, the pressure is steadily pumped from the atmospheric pressure to the absolute pressure of 495Pa, the temperature is controlled at 265°C, and the reaction time is 30 minutes. The catalyst is a mixture of magnesium ethylene glycol and antimony ethylene glycol, in which magnesium glycol and antimony ethylene glycol mass ratio is 3: 1;
      After the polycondensation reaction in the low-vacuum stage, the vacuum is continued to reduce the reaction pressure to 98Pa, the reaction temperature is controlled at 277°C., and the reaction time is 70 minutes. The polyester sections are obtained by granulation.
3. Solvent cleaning
   Polyester sections are washed with water and rinsing agent ethylene glycol monoethyl ether at 120°C and 0.3MPa for 5 hours. After washing, the polyester sections are washed with hot water at 72°C for 12 minutes and then washed with cold water. After drying and cooling, the mass ratio of water to the rinsing agent is 100: 4, the ratio of the polyester slice to the water and the rinsing agent, that is, the solid to liquid ratio is 1: 8;
**4.** Solid-phase polycondensation:
   The obtained polyester sections are solidified by polycondensation to increase the intrinsic viscosity of the polyester sections to 1.2 dL/g, that is, high-viscosity sections.
**5.** The main process parameters in spinning:
   The temperature of extrusion of 320 °C,
   The air temperature of cooling is 30 °C,
   The process of stretching, heat setting:
      GR-1 speed 600m/min, temp: room temperature,
      GR-2 speed 1000m/min, temp: 100 °C,
      GR-3 speed 2500m/min, temp: 150 °C,
      GR-4 speed 3500m/min, temp: 210 °C,
      GR-5 speed 3500m/min, temp: 210 °C,
      GR-6 speed 3400m/min, temp: 210 °C,
   The winding speed is 3400 m/min.
   The ultra-low shrinkage polyester industrial yarn obtained under the conditions of a temperature of 177°C ×10min×0.05cN/dtex has the dry heat shrinkage rate of 1.82%. Additionally, the linear density deviation rate is 0.9%, breaking strength is 8.6cN/dtex, CV value of breaking strength is 2.1%, breaking extension is 19.5% and CV value of breaking extension is 6.4%.

## Claims

1. A process for preparing an ultra-low shrinkage industrial yarn said yarn having a dry heat shrinkage rate of 1.8 ± 0.25%, under the testing condition of 177°C x10min x 0.05cN/dtex;
said process comprising:
obtaining a polyester by the esterification of terephthalic acid and ethylene glycol and polycondensation catalyzed by a mixture of magnesium ethylene glycol and antimony ethylene glycol and followed by
obtaining a polyester section by granulating;
preparing the polyester section by boiling and washing and solid state polycondensation; and
obtaining said ultra-low shrinkage polyester industrial yarn by measuring extrusion, cooling, oiling, stretching, heat setting and spinning;
wherein the carboxyl end group is less than 15 mol/t;
wherein the mass percentage of oligomer is lower than 0.5%;
wherein the molecular formula of magnesium ethylene glycol is Mg(OCH₂CH₂OH)₂ ;
(1a) wherein the preparation of said magnesium ethylene glycol comprises:
adding Ethylene glycol in a single-compartment electrolytic cell, in which magnesium chloride is the supporting electrolyte,
wherein an anode is magnesium, and a cathode is graphite;
operating said single-compartment electrolytic cell for 10 to 12 hours under DC at a temperature of between 50 to 60°C;
controlling an initial voltage between 6 and 10V, and controlling cathodic current density between 150 to 200mA;
obtaining a white suspension liquid after removing the electrodes, decompressing, filtrating, and washing with anhydrous alcohol; and
obtaining magnesium ethylene glycol after drying;
(1b) wherein the preparation of said polyester, comprising said esterification and polycondensation comprises:
performing an esterification reaction using terephthalic acid and ethylene glycol as raw materials;
adding in a polyether-inhibitor;
carrying out said esterification reaction and obtaining esterification products;
increasing pressure in a nitrogen atmosphere during said esterification reaction, controlling the pressure in a scale of atmospheric pressure to 0.3MPa, and controlling the temperature between 250 to 260°C;
said esterification reaction ending after the amount of distillate water in the esterification reaction reaches at least 90% of the theoretical value;
said polycondensation reaction comprising a low vacuum stage and a high vacuum stage:
said low vacuum stage, comprising adding a catalyst and a stabilizer into the esterification reaction products;
the condensation reaction starting under the condition of negative pressure;
decreasing the pressure smoothly from atmospheric pressure to a pressure lower than the absolute pressure 500Pa;
controlling the temperature between 260 to 270°C;
controlling the reaction time from 30 to 50 mins;
wherein the catalyst used in the reaction is said mixture of magnesium ethylene glycol and antimony ethylene glycol;
said high vacuum stage of the polycondensation reaction comprising decreasing the pressure from atmospheric pressure to lower than an absolute pressure 100Pa;
controlling the temperature of reaction between 275 to 280°C;
controlling the reaction time between 50 to 90mins;
obtaining the polyester after the reaction as mentioned above, and obtaining said polyester section by granulating;
2(c) said boiling and washing process comprises:
boiling said polyester section with water and boiling -wash solvent for 3-5 hours at a temperature of 120-130°C and under a pressure of 0.2-0.3 MPa;
then washing said polyester section;
2(d) solid state polycondensation comprising:
obtaining a high-viscosity section of polyester in which an intrinsic viscosity of the polyester is raised to a value between 1.0 to 1.2 dL/g by solid state polycondensation;
wherein the main process parameters of spinning are:
the temperature of extrusion is 290 to 320°C;
the air temperature of cooling is 20 to 30°C; and
wherein the process of stretching and heat setting is controlled as follows:
GR-1 at speed of 450 to 600m/min, temp: room temperature;
GR-2 at speed of 480 to 1000m/min, temp: 80 to 100°C;
GR-3 at speed of 1800 to 2500m/min, temp: 100 to 150°C;
GR-4 at speed of 2800 to 3500m/min, temp: 200 to 250°C;
GR-5 at speed of 2800 to 3500m/min, temp: 200 to 250°C;
GR-6 at speed of 2600 to 3400m/min, temp: 150 to 220°C; and
the winding speed is 2600 to 3400m/min.

2. A process for preparing the ultra-low shrinkage industrial yarn according to claim 1, wherein the molar ratio of the ethylene glycol to terephthalic acid is in the range 1.2:1 to 2.0:1.

3. A process for preparing the ultra-low shrinkage industrial yarn according to claim 1, wherein the mass ratio of magnesium ethylene glycol to antimony ethylene glycol in their mixture is 2 to 3:1;
the mass of the catalyst is 0.01~0.05% of the terephthalic acid;
the stabilizer is chosen from triphenyl phosphate, trimethyl phosphate and trimethyl phosphite; and
the mass of stabilizer is 0.01-0.05% of the terephthalic acid.

4. A process for preparing the ultra-low shrinkage industrial yarn according to claim 1, wherein the mass ratio of water to the rinsing agent is 100:4 to 100:3, and the ratio of polyester section to water and rinsing agent is 1:5~10, the rinsing agent is selected from one of 2-ethoxyethanol, 2-propoxyethanol and ethylene glycol monobutyl ether.

5. A process for preparing the ultra-low shrinkage industrial yarn according to claim 1, wherein said washing process comprises washing the polyester sections with 70-80°C water for 10-15min after boiling the polyester sections, then washing them with cold water, and drying and cooling down said polyester sections.

6. A process for preparing the ultra-low shrinkage industrial yarn according to claim 1, wherein the polyether inhibitor is chosen from the sodium acetate and calcium acetate, the mass of polyether inhibitor is 0.01-0.05% of terephthalic acid.

7. A process for preparing the ultra-low shrinkage industrial yarn according to claim 1, wherein the molar ratio of the ethylene glycol to terephthalic acid is 1.2:1 to 2.0:1.

## Patentansprüche

1. Ein Verfahren zur Herstellung eines ultra-niedrigschrumpfenden Industriegarns, das Garn mit einer trockenen Wärmeschrumpfrate von 1,8 ± 0,25 % unter Testbedingungen von 177°C x 10 min x 0,05 cN/dtex aufweist;
Dieser Prozess umfasst:
Erhalt eines Polyesters durch die Veresterung von Terephthalsäure und Ethylenglykol sowie Polykondensation, katalysiert durch eine Mischung aus Magnesiumethylenglykol und Antimon-Ethylenglykol, gefolgt von
durch Granulieren einen Polyesterabschnitt zu erhalten;
Vorbereitung des Polyesterabschnitts durch Kochen, Waschen und Festkörperpolykondensation; und
Ermittlung dieses ultra-schrumpfarmen Polyester-Industriegarns durch Messung von Extrusion, Kühlung, Ölierung, Dehnung, Wärmefixierung und Spinnen;
wobei die Carboxyl-Endgruppe weniger als 15 mol/t beträgt;
wobei der Massenanteil des Oligomers niedriger als 0,5 % ist;
wobei die Molekularformel von Magnesiumethylenglykol Mg(OCH_{2CH2OH)2 ist};
(1a) wobei die Herstellung des genannten Magnesiumethylenglykols Folgendes umfasst:
durch Zugabe von Ethylenglykol in einer elektrolytischen Zelle mit einem einzelnen Kompartiment, in der Magnesiumchlorid der unterstützende Elektrolyt ist,
wobei eine Anode Magnesium ist und eine Kathode Graphit;
betreibt diese elektrolytische Zelle mit nur einem Kompartiment 10 bis 12 Stunden unter Gleichstrom bei einer Temperatur zwischen 50 und 60°C;
die Steuerung einer Anfangsspannung zwischen 6 und 10 V sowie die kathodische Stromdichte zwischen 150 und 200 mA;
Ermittlung einer weißen Suspensionsflüssigkeit nach Entfernen der Elektroden, Dekomprimierung, Filtration und Waschen mit wasserfreiem Alkohol; und
Aufnahme von Magnesiumethylenglykol nach dem Trocknen;
(1b) wobei die Herstellung des genannten Polyesters, bestehend aus besagter Veresterung und Polykondensation, besteht:
Durchführung einer Veresterungsreaktion unter Verwendung von Terephthalsäure und Ethylenglykol als Rohstoffe;
Hinzufügung eines Polyetherinhibitors;
Durchführung dieser Veresterungsreaktion und Gewinnung von Veresterungsprodukten;
Erhöhung des Drucks in einer Stickstoffatmosphäre während dieser Veresterungsreaktion, Regulierung des Drucks auf einer Skala von Atmosphärendruck bis 0,3 MPa und Temperaturregelung zwischen 250 und 260°C;
diese Veresterungsreaktion endet, nachdem die Menge an Destillatwasser in der Veresterungsreaktion mindestens 90 % des theoretischen Werts erreicht hat;
Diese Polykondensationsreaktion besteht aus einer Niedrigvakuumstufe und einer Hochvakuumstufe:
diese niedrige Vakuumstufe, bestehend aus der Zugabe eines Katalysators und Stabilisators zu den Veresterungsreaktionsprodukten;
die Kondensationsreaktion, die unter Unterdruck beginnt;
den Druck gleichmäßig von atmosphärischem Druck auf einen Druck unter dem absoluten 500Pa zu senken;
Kontrolle der Temperatur zwischen 260 und 270°C;
Kontrolle der Reaktionszeit von 30 bis 50 Minuten;
wobei der in der Reaktion verwendete Katalysator die genannte Mischung aus Magnesiumethylenglykol und Antimon-Ethylenglykol ist;
diese Hochvakuumstufe der Polykondensationsreaktion besteht aus der Absenkung des Drucks vom atmosphärischen Druck auf weniger als einen absoluten Druck von 100Pa;
Kontrolle der Reaktionstemperatur zwischen 275 und 280°C;
Kontrolle der Reaktionszeit zwischen 50 und 90 Minuten;
das Polyester nach der oben erwähnten Reaktion zu gewinnen und diesen Polyesterabschnitt durch Granulieren zu erhalten;
2(c) Der genannte Koch- und Waschprozess umfasst:
das Polyesterteil mit Wasser kochen und das Lösungsmittel 3-5 Stunden bei einer Temperatur von 120-130°C und unter einem Druck von 0,2-0,3 MPa kochen;
dann den Polyesterabschnitt zu waschen;
2(d) Festkörperpolykondensation, bestehend:
wodurch ein hochviskoser Polyesterabschnitt erreicht wird, bei dem die intrinsische Viskosität des Polyesters durch Festkörperpolykondensation auf einen Wert zwischen 1,0 und 1,2 dL/g erhöht wird;
wobei die Hauptprozessparameter des Spinnens sind:
die Extrusionstemperatur liegt bei 290 bis 320 °C;
die Abkühllufttemperatur beträgt 20 bis 30 °C; und
wobei der Prozess des Dehnens und der Wärmeanhärtung wie folgt gesteuert wird:
GR-1 bei einer Geschwindigkeit von 450 bis 600 m/min, Temperatur: Raumtemperatur;
GR-2 bei einer Geschwindigkeit von 480 bis 1000 m/min, Temperatur: 80 bis 100 °C;
GR-3 mit Geschwindigkeit von 1800 bis 2500 m/min, Temperatur: 100 bis 150 °C;
GR-4 bei Geschwindigkeiten von 2800 bis 3500 m/min, Temperatur: 200 bis 250 °C;
GR-5 mit einer Geschwindigkeit von 2800 bis 3500 m/min, Temperatur: 200 bis 250 °C;
GR-6 bei Geschwindigkeiten von 2600 bis 3400 m/min, Temperatur: 150 bis 220 °C; und
Die Windgeschwindigkeit beträgt 2600 bis 3400 m/min.

2. Ein Verfahren zur Herstellung des ultra-schrumpfarmen Industriegarns gemäß Anspruch 1, bei dem das molare Verhältnis von Ethylenglykol zu Terephthalsäure im Bereich von 1,2:1 bis 2,0:1 liegt.

3. Ein Verfahren zur Herstellung des ultra-schrumpfarmen Industriegarns gemäß Anspruch 1, bei dem das Massenverhältnis von Magnesiumethylenglykol zu Antimon-Ethylenglykol in ihrer Mischung 2 zu 3:1 beträgt;
Die Masse des Katalysators beträgt 0,01~0,05 % der Terephthalsäure;
Der Stabilisator wird aus Triphenylphosphat, Trimethylphosphat und Trimethylphosphit ausgewählt; und
Die Masse des Stabilisators beträgt 0,01-0,05 % der Terephthalsäure.

4. Ein Verfahren zur Herstellung des ultra-schrumpfarmen Industriegarns gemäß Anspruch 1, bei dem das Massenverhältnis von Wasser zum Spülmittel 100:4 bis 100:3 beträgt und das Verhältnis von Polyesterabschnitt, Wasser und Spülmittel 1:5~10; das Spülmittel wird aus einem von 2-Ethoxyethanol, 2-Propoxyethanol und Ethylenglykolmonobutylether ausgewählt.

5. Ein Verfahren zur Herstellung des ultra-schrumpfarmen Industriegarns gemäß Anspruch 1, bei dem der Waschprozess darin besteht, die Polyesterabschnitte nach dem Kochen mit 70-80°C Wasser 10-15 Minuten zu waschen, sie dann mit kaltem Wasser zu waschen und die Polyesterabschnitte zu trocknen und abzukühlen.

6. Ein Verfahren zur Herstellung des ultra-schrumpfarmen Industriegarns gemäß Anspruch 1, bei dem der Polyetherinhibitor aus Natriumacetat und Calciumacetat gewählt wird, beträgt die Masse des Polyetherinhibitors 0,01-0,05 % Terephthalsäure.

7. Ein Verfahren zur Herstellung des Industriegarns mit ultraniedriger Schrumpfung gemäß Anspruch 1, bei dem das molare Verhältnis von Ethylenglykol zu Terephthalsäure 1,2:1 bis 2,0:1 beträgt.

## Revendications

1. Un procédé de préparation d'un fil industriel à très faible rétraction prévoyait que le fil avait un taux de retrait thermique à sec de 1,8 ± 0,25 %, sous condition d'essai de 177°C x10min x 0,05cN/dtex ;
Ce processus comprend :
obtenir un polyester par l'estérification de l'acide térephtalique et de l'éthylène glycol et par polycondensation, catalysé par un mélange de magnésium, éthylène glycol et antimoine, suivi de
obtenir une section en polyester par granulation ;
la préparation de la section polyester par ébullition, lavage et polycondensation à l'état solide ; et
obtenir ce fil industriel polyester à très faible rétraction en mesurant l'extrusion, le refroidissement, l'huilage, l'étirement, la thermofixation et le filage ;
où le groupe carboxyle est inférieur à 15 mol/t ;
où le pourcentage massif d'oligomère est inférieur à 0,5 % ;
où la formule moléculaire du magnésium éthylène glycol est Mg(OCH_{2CH2OH)2} ;
(1a) dans laquelle la préparation de ledit magnésium éthylène glycol comprend :
ajouter de l'éthylène glycol dans une cellule électrolytique à compartiment unique, dans laquelle le chlorure de magnésium est l'électrolyte de soutien,
où une anode est du magnésium, et une cathode est du graphite ;
faisant fonctionner cette cellule électrolytique à compartiment unique pendant 10 à 12 heures sous courant continu à une température comprise entre 50 et 60°C ;
contrôle d'une tension initiale entre 6 et 10V, et régule la densité de courant cathodique entre 150 et 200 mA ;
obtenir un liquide blanc en suspension après avoir retiré les électrodes, décompressé, filtré et lavé avec de l'alcool anhydre ; et
obtenir du magnésium-éthylène glycol après séchage ;
(1b) dans laquelle la préparation de ledit polyester, comprenant ladite estérification et polycondensation, comprend :
la réalisation d'une réaction d'estérification utilisant l'acide térephtalique et l'éthylène glycol comme matières premières ;
l'ajout d'un inhibiteur de polyéther ;
la réalisation de cette réaction d'estérification et l'obtention des produits d'estérification ;
l'augmentation de la pression dans une atmosphère d'azote lors de cette réaction d'estérification, le contrôle de la pression à une échelle de pression atmosphérique jusqu'à 0,3 MPa, et le contrôle de la température entre 250 et 260°C ;
Cette réaction d'estérification se terminant après que la quantité d'eau distillée dans la réaction d'estérification atteigne au moins 90 % de la valeur théorique ;
Cette réaction de polycondensation comprenant un étage à faible vide et un étage à vide élevé :
ce niveau à faible vide, comprenant l'ajout d'un catalyseur et d'un stabilisateur dans les produits de la réaction d'estérification ;
la réaction de condensation commençant sous pression négative ;
la diminution progressive de la pression atmosphérique à une pression inférieure à la pression absolue de 500Pa ;
contrôlant la température entre 260 et 270°C ;
contrôle du temps de réaction de 30 à 50 minutes ;
où le catalyseur utilisé dans la réaction est ce mélange de magnésium, éthylène glycol et antimoine éthylène glycol ;
cette étape à vide élevé de la réaction de polycondensation, comprenant la diminution de la pression atmosphérique à une pression absolue de 100Pa ;
contrôlant la température de réaction entre 275 et 280°C ;
contrôler le temps de réaction entre 50 et 90 minutes ;
obtenir le polyester après la réaction mentionnée ci-dessus, et obtenir cette section de polyester par granulation ;
2(c) dit que le procédé d'ébullition et de lavage comprend :
la cueillette en polyester avec de l'eau et du solvant de lavage bouillant pendant 3 à 5 heures à une température de 120-130°C et sous une pression de 0,2-0,3 MPa ;
puis laver cette section en polyester ;
2(d) solid state polycondensation comprising:
obtenir une section de polyester à haute viscosité dans laquelle la viscosité intrinsèque du polyester est portée à une valeur comprise entre 1,0 et 1,2 dL/g par polycondensation à l'état solide ;
où les principaux paramètres du processus de la rotation sont :
la température d'extrusion est de 290 à 320°C ;
la température de l'air de refroidissement est de 20 à 30°C ; et
où le processus d'étirement et de fixation thermique est contrôlé comme suit :
GR-1 à une vitesse de 450 à 600 m/min, température : température ambiante ;
GR-2 à une vitesse de 480 à 1000 m/min, température : 80 à 100°C ;
GR-3 à une vitesse de 1800 à 2500 m/min, température : 100 à 150°C ;
GR-4 à une vitesse de 2800 à 3500 m/min, température : 200 à 250°C ;
GR-5 à une vitesse de 2800 à 3500 m/min, température : 200 à 250°C ;
GR-6 à une vitesse de 2600 à 3400 m/min, température : 150 à 220°C ; et
La vitesse de remontage est de 2600 à 3400 m/min.

2. Un procédé de préparation du fil industriel à ultra-faible retrait selon la revendication 1, dans lequel le rapport molaire de l'éthylène glycol à l'acide térephtalique est de 1,2:1 à 2,0:1.

3. Un procédé de préparation du fil industriel à ultra faible retrait selon la revendication 1, dans lequel le rapport massique entre l'éthylène glycol magnésium et l'éthylène glycol antimoine dans leur mélange est de 2 à 3:1 ;
La masse du catalyseur est de 0,01~0,05 % de l'acide térephtalique ;
Le stabilisateur est choisi parmi le phosphate de triphényle, le phosphate de triméthyle et le phosphite de triphéthyle ; et
La masse du stabilisateur est de 0,01 à 0,05 % de l'acide térephtalique.

4. Un procédé de préparation du fil industriel à ultra-faible retrait selon l'affirmation 1, où le rapport massique de l'eau à l'agent de rinçage est de 100:4 à 100:3, et le rapport entre la section polyester et l'eau et l'agent de rinçage est de 1:5~10, l'agent de rinçage est choisi parmi l'un des éther 2-éthoxyéthanol, 2-propoxyéthanol et monobutyle d'éthylène glycol.

5. Un procédé de préparation du fil industriel à très faible rétrécissement selon la revendication 1, dans lequel ce procédé de lavage consiste à laver les sections en polyester avec de l'eau à 70-80°C pendant 10 à 15 minutes après avoir fait bouillir les sections en polyester, puis à les laver à l'eau froide, et à sécher et refroidir ces sections en polyester.

6. Un procédé de préparation du fil industriel à ultra-faible retrait selon la revendication 1, dans lequel l'inhibiteur de polyéther est choisi parmi l'acétate de sodium et l'acétate de calcium, la masse de l'inhibiteur de polyéther est de 0,01 à 0,05 % d'acide térephtalique.

7. Un procédé de préparation du fil industriel à très faible rétraction selon la revendication 1, dans lequel le rapport molaire de l'éthylène glycol à l'acide térephtalique est de 1,2:1 à 2,0:1.
